Europäisches Patentamt

European Patent Office

Office européen des brevets

(19)

(11) Numéro de publication : **0 374 069 B1**

## (12) FASCICULE DE BREVET EUROPEEN

(45) Date de publication du fascicule du brevet :
02.12.92 Bulletin 92/49

(51) Int. Cl.⁵ : **A01D 34/68**

(21) Numéro de dépôt : **89440135.5**

(22) Date de dépôt : **14.12.89**

(54) **Tondeuse à gazon électrique munie d'un tambour enrouleur de câble d'alimentation.**

(30) Priorité : **15.12.88 FR 8816782**

(43) Date de publication de la demande :
**20.06.90 Bulletin 90/25**

(45) Mention de la délivrance du brevet :
**02.12.92 Bulletin 92/49**

(84) Etats contractants désignés :
**AT BE CH DE ES IT LI NL SE**

(56) Documents cités :
**DE-A- 1 507 426**
**US-A- 3 456 430**

(73) Titulaire : **Outils Wolf, Société à responsabilité limitée**
**5, Rue de l'Industrie**
**F-67160 Wissembourg (FR)**

(72) Inventeur : **L'Inventeur a renoncé à sa désignation**

(74) Mandataire : **Nuss, Pierre et al**
**10, rue Jacques Kablé**
**F-67000 Strasbourg (FR)**

## Description

La présente invention concerne le domaine de la fabrication de tondeuses à gazon, en particulier de tondeuses à gazon électriques, et a pour objet une telle tondeuse munie d'un tambour enrouleur de câble d'alimentation.

Les tondeuses à gazon entraînées par moteur électrique nécessitent pour leur fonctionnement l'utilisation d'un câble d'alimentation spécialement adapté à cet effet. Un tel câble présente des sections de fil importantes en rapport avec la puissance du moteur ainsi qu'une longueur pouvant atteindre, voire dépasser, 50 mètres, de sorte qu'il devient un accessoire particulièrement difficile à manipuler du fait de son poids important et du risque de formation de noeuds. En effet, la mise en place avant la tonte ainsi que le rangement de ce câble doivent être entièrement réalisés manuellement, entraînant une dépense musculaire importante ainsi qu'un risque de détérioration du câble par torsion, formation de noeuds, etc...

On connaît également par DE-A-1 507 426 un enrouleur pour tondeuse à gazon électrique couplé à l'arbre moteur de ladite tondeuse au moyen d'un embrayage magnétique à glissement contrôlé.

Par ailleurs, US-A-3 456 430 a aussi pour objet une tondeuse à gazon électrique, dont le capotage est en forme d'enrouleur et auquel est appliqué automatiquement un couple par réaction de l'arbre moteur.

Les dispositifs décrits dans ces deux documents sont directement solidaires de la tondeuse et non d'un tambour indépendant. Il en résulte qu'une détérioration éventuelle minime de l'enrouleur entraîne une immobilisation de la tondeuse afin d'éviter tout risque de dommages du moteur.

La présente invention a pour but de pallier ces inconvénients.

Elle a, en effet, pour objet une tondeuse à gazon électrique, munie d'un tambour enrouleur de câble guidé en rotation sur le capot moteur, qui présente avantageusement une forme cylindrique ou légèrement conique et est muni à sa base d'un anneau d'appui sensiblement horizontal et plan, le tambour enrouleur de câble étant guidé sur l'anneau d'appui du capot moteur au moyen d'un dispositif de guidage comportant des rouleaux coniques ou des billes monté entre ledit anneau d'appui et la joue du tambour, caractérisée en ce que le tambour enrouleur de câble est pourvu d'un noyau d'enroulement à section intérieure correspondante à la section extérieure du capot moteur de protection et, d'une part, d'une joue s'appuyant sur l'anneau d'appui du capot moteur, en position de service, et, d'autre part, d'une joue munie d'un moyen de réception d'une fiche électrique et d'un moyen d'actionnement du tambour.

L'invention sera mieux comprise grâce à la description ci-après, qui se rapporte à un mode de réalisation préféré, donné à titre d'exemple non limitatif et expliqué avec référence aux dessins annexés, dans lesquels :

la figure 1 est une vue en élévation latérale d'une tondeuse à gazon conforme à l'invention ;
la figure 2 est une vue analogue à celle de la figure 1, sans le tambour enrouleur de câble ;
la figure 3 est une vue en élévation latérale et en coupe, à plus grande échelle, du tambour enrouleur de câble, et
la figure 4 est une vue en élévation frontale du tambour enrouleur de câble.

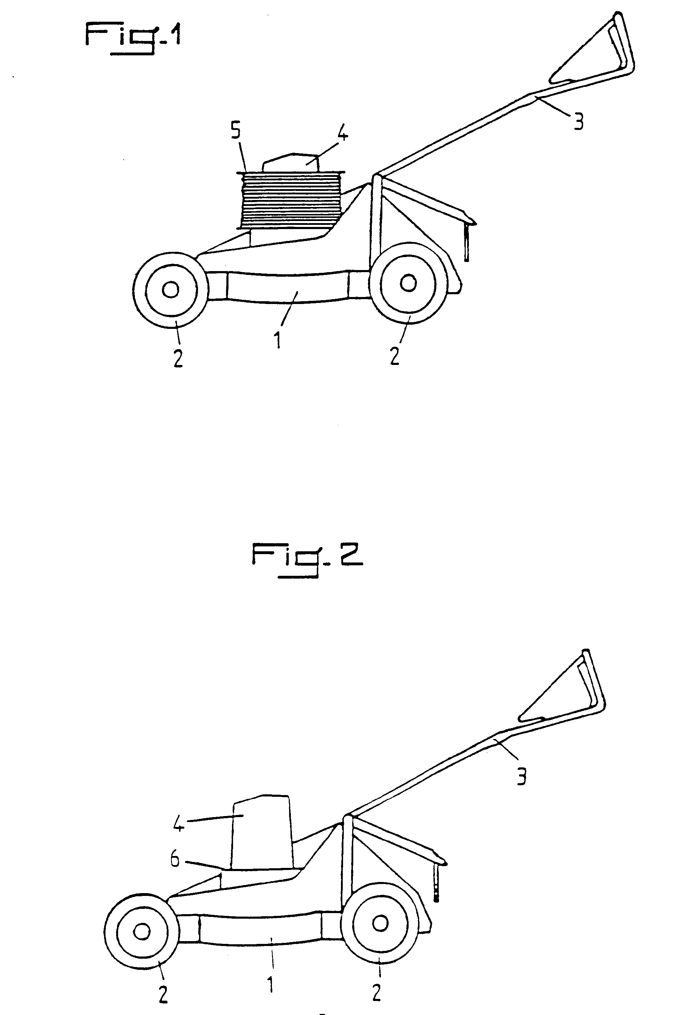

Les figures 1 et 2 des dessins annexés représentent une tondeuse à gazon électrique essentiellement constituée par un carter 1 monté sur des roues 2 et muni d'un guidon 3 et par un moteur d'entraînement de la lame de coupe logé sous un capot moteur de protection 4.

La tondeuse à gazon électrique est munie d'un tambour enrouleur de câble 5 guidé en rotation sur le capot moteur 4.

Le capot moteur 4 présente avantageusement une forme cylindrique ou légèrement conique et est muni à sa base d'un anneau d'appui 6 sensiblement horizontal et plan (figure 2).

Le tambour enrouleur de câble 5 (figures 1, 3 et 4) est pourvu d'un noyau d'enroulement à section intérieure correspondante à la section extérieure du capot moteur de protection 4 et, d'une part, d'une joue 7 s'appuyant sur l'anneau d'appui 6 du capot moteur 4, en position de service, et, d'autre part, d'une joue 8 munie d'un moyen 9 de réception d'une fiche électrique et d'un moyen 10 d'actionnement du tambour 5.

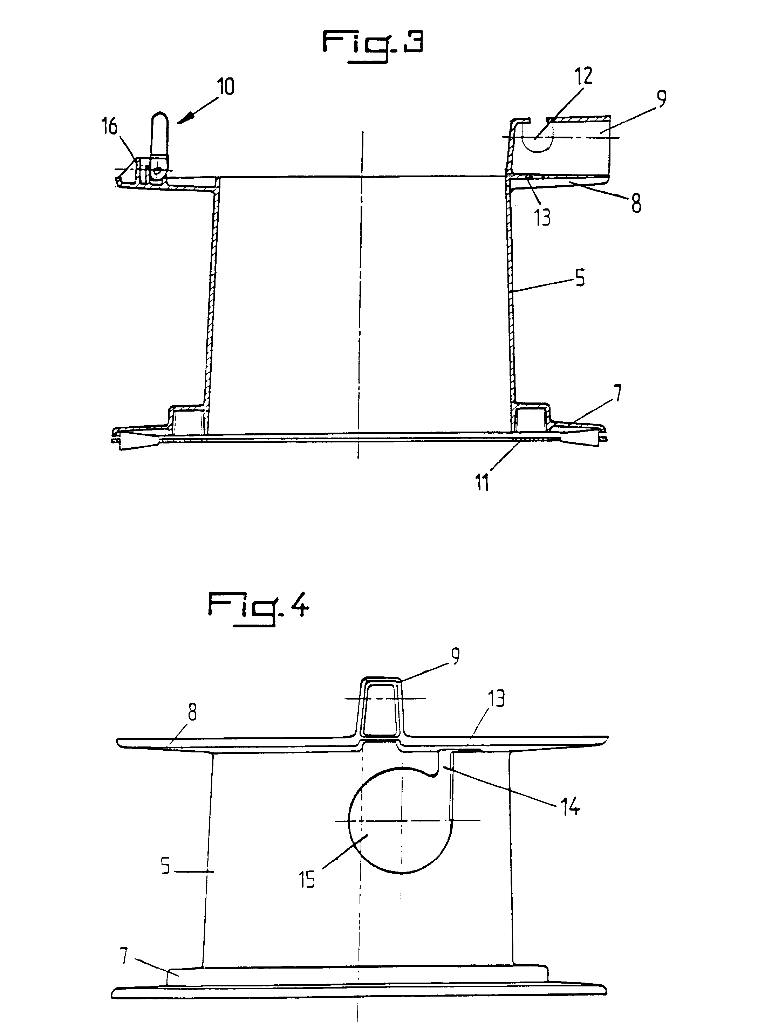

Selon une autre caractéristique de l'invention, le tambour enrouleur de câble 5 est guidé sur l'anneau d'appui 6 du capot moteur 4 au moyen d'un dispositif de guidage 11 comportant des rouleaux coniques ou des billes monté entre ledit anneau d'appui 6 et la joue 7 du tambour 5 (figure 3). Ce mode de réalisation permet de faciliter la rotation du tambour 5 sur le capot moteur 4, tant lors de l'enroulement du câble que lors de son déroulement.

Le moyen 9 de réception d'une fiche électrique est réalisé, de préférence, sous forme d'une nervure moulée sur la partie supérieure de la joue 8 et pourvue d'une rainure transversale 12 de passage de l'embout de la fiche, la joue 8 étant munie, en outre, à proximité du moyen 9, d'une rainure 13 se raccordant à une rainure verticale 14 ménagée dans la paroi du noyau d'enroulement et débouchant sur un orifice 15 de passage de la fiche électrique (figures 3 et 4). Ainsi, pour réaliser l'enroulement du câble après la tonte, il suffit de passer la fiche d'une extrémité à travers du câble l'orifice 15 de la paroi du noyau d'enroulement du tambour et de la fixer sur le moyen 9 par passage du câble dans les rainures 12, 13 et 14, de monter alors le tambour 5 sur le capot 4 et d'effectuer ledit enroulement par mise en rotation du tambour 5.

Le moyen 10 d'actionnement du tambour 5 est avantageusement constitué sous forme d'une poignée montée de manière escamotable par pivotement sur la joue 8 au moyen d'un palier 16 solidaire de cette dernière (figure 3). La prévision d'un tel moyen d'actionnement 10 permet de faciliter encore davantage l'actionnement en rotation du tambour 5.

Conformément à une variante de réalisation de l'invention, non représentée aux dessins annexés, les joues 7 et 8 du tambour 5 sont avantageusement munies de deux moyens 10 d'actionnement escamotables diamétralement opposés. Ainsi, la manutention du tambour 5, est facilitée, les deux moyens 10 permettant, par exemple, de dérouler ou de rembobiner le câble, le tambour étant porté à bout de bras par l'utilisateur.

Grâce à l'invention, il est possible de réaliser une tondeuse à gazon électrique pourvue d'un tambour enrouleur de câble d'alimentation permettant un enroulement et un déroulement faciles dudit câble ainsi qu'un rangement pratique de ce dernier, avec une disponibilité totale, sur la tondeuse et pouvant être retirée ou mis en place de ou sur ce dernier, quelle que soit sa position angulaire. En outre, du fait de la prévision d'un tambour enrouleur, les risques de détérioration du câble par formation de noeuds, ou autres, sont éliminés.

Bien entendu, l'invention n'est pas limitée au mode de réalisation décrit et représenté aux dessins annexés. Des modifications restent possibles, notamment du point de vue de la constitution des divers éléments ou par substitution d'équivalents techniques, sans sortir pour autant du domaine de protection de l'invention.

## Revendications

1. Tondeuse à gazon électrique, munie d'un tambour enrouleur de câble (5) guidé en rotation sur le capot moteur (4), qui présente avantageusement une forme cylindrique ou légèrement conique et est muni à sa base d'un anneau d'appui (6) sensiblement horizontal et plan, le tambour enrouleur de câble (5) étant guidé sur l'anneau d'appui (6) du capot moteur (4) au moyen d'un dispositif de guidage (11) comportant des rouleaux coniques ou des billes monté entre ledit anneau d'appui (6) et la joue (7) du tambour (5), caractérisée en ce que le tambour enrouleur de câble (5) est pourvu d'un noyau d'enroulement à section intérieure correspondante à la section extérieure du capot moteur de protection (4) et, d'une part, d'une joue (7) s'appuyant sur l'anneau d'appui (6) du capot moteur (4), en position de service, et, d'autre part, d'une joue (8) munie d'un moyen (9) de réception d'une fiche électrique et d'un moyen (10) d'actionnement du tambour (5).

2. Tondeuse, suivant la revendication 1, caractérisée en ce que le moyen (9) de réception d'une fiche électrique est réalisé, de préférence, sous forme d'une nervure moulée sur la partie supérieure de la joue (8) et pourvue d'une rainure transversale (12) de passage de l'embout de la fiche, la joue (8) étant munie, en outre, à proximité du moyen (9), d'une rainure (13) se raccordant à une rainure verticale (14) ménagée dans la paroi du noyau d'enroulement et débouchant sur un orifice (15) de passage de la fiche électrique.

3. Tondeuse, suivant la revendication 1, caractérisée en ce que le moyen (10) d'actionnement du tambour (5) est avantageusement constitué sous forme d'une poignée montée de manière escamotable par pivotement sur la joue (8) au moyen d'un palier (16) solidaire de cette dernière.

4. Tondeuse, suivant l'une quelconque des revendications 1 et 3, caractérisée en ce que les joues (7 et 8) du tambour (5) sont avantageusement munies de deux moyens (10) d'actionnement escamotables diamétralement opposés.

## Claims

1. Electric lawn-mower equipped with a cable-winding drum (5) rotatably guided on the motor hood (4), which advantageously has a cylindrical or slightly conical shape and is equipped at its base with a substantially horizontal plane supporting ring (6), the cable-winding drum (5) being guided on the supporting ring (6) of the motor hood (4) by means of a guiding device (11) comprising conical rollers or balls mounted between said supporting ring (6) and the cheek (7) of the drum (5), characterised in that the cable-winding drum (5) is provided with a winding core having an internal cross section corresponding to the external cross section of the protective motor hood (4) and, on the one hand, with a cheek (7) resting on the supporting ring (6) of the motor hood (4) in the operating position and, on the other hand, with a cheek (8) equipped with a means (9) for receiving an electric plug and a means (10) for actuating the drum (5).

2. Lawn-mower according to claim 1, characterised in that the means (9) for receiving an electric plug is preferably produced in the form of a rib moulded on the upper portion of the cheek (8) and provided with a transverse groove (12) for the passage of the plug connector, the cheek (8) also being equipped, in the vicinity of the means (9), with a groove (13) connected to a vertical groove (14) made in the wall of the winding core and opening in an orifice (15) for the passage of the electric plug.

3. Lawn-mower according to claim 1, characterised in that the means (10) for actuating the drum (5) advantageously consists of a handle mounted in a pivotally retractable manner on the cheek (8) by means of a bearing (16) integral with the cheek (8).

4. Lawn-mower according to any one of claims 1 and 3, characterised in that the cheeks (7 and 8) of the drum (5) are advantageously equipped with two diametrally opposed retractable actuating means (10).

**Patentansprüche**

1. Elektrischer Rasenmäher, versehen mit einer auf der Motorhaube (4) drehbaren Kabeltrommel (5), wobei die Motorhaube (4) vorteilhaft eine zylindrische oder leicht konische Form aufweist und an ihrer Basis mit einem deutlich horizontalen und flachen Auflagering (6) versehen ist, und wobei die Kabeltrommel (5) auf dem Auflagering (6) der Motorhaube (4) mit Hilfe einer mit konischen Rollen oder Kugeln ausgestatteten Führungseinrichtung (11) geführt wird, die zwischen dem besagten Auflagering (6) und der Wange (7) der Trommel (5) montiert ist, dadurch gekennzeichnet, dass die Kabeltrommel (5) mit einem Wickelkern mit einem dem Aussenquerschnitt der Motorschutzhaube (4) entsprechenden Innenquerschnitt und, einerseits, mit einer in Betriebsstellung auf dem Auflagering (6) der Motorhaube (4) aufliegenden Wange (7), und, andererseits, mit einer, mit einem Mittel (9) zur Aufnahme eines Elektrosteckers und einem Griff (10) zum Ingansetzen der mit einer Wange (8) versehenen Trommel (5) ausgestattet ist.

2. Rasenmäher nach Anspruch 1, dadurch gekennzeichnet, dass das Mittel (9) zur Aufnahme eines Elektrosteckers vorzugsweise in Form einer Rippe ausgeführt ist, die auf dem Oberteil der Wange (8) angegossen und mit einer querlaufenden Einkerbung (12) zur Durchführung des Steckerschuhs versehen ist, wobei die Wange (8) ausserdem, in der Nähe des Mittels (9), eine Rille (13) aufweist, welche an eine in der Wandung des Wickelkerns ausgesparte, vertikale Rille (14) anschliesst und auf einer Öffnung (15) zur Durchführung des Elektrosteckers mündet.

3. Rasenmäher nach Anspruch 1, dadurch gekennzeichnet, dass der Griff (10) zur Betätigung der Trommel (5) vorteilhaft als Handgriff ausgebildet ist, der durch Schwenken umklappbar auf der Wange (8) mit Hilfe eines mit dem letzteren fest verbundenen Lagers montiert ist.

4. Rasenmäher nach einem der Ansprüche 1 und 3, dadurch gekennzeichnet, dass die Wangen (7 und 8) der Trommel (5) vorteilhaft mit zwei einander diametral gegenüberliegenden, umklappbaren Griffen (10) zur Betätigung ausgestattet sind.

Fig.1

Fig. 2

# Fig.3

# Fig.4

6